# FASCICULE DE BREVET EUROPEEN

(11) **EP 2 754 253 B1**
(45) Date de publication et mention de la délivrance du brevet: **05.08.2015**
(21) Numéro de dépôt: 12734864.7
(22) Date de dépôt: 29.06.2012
(51) Int. Cl.: H04B 7/155

(54) **DISPOSITIF DE CORRECTION D'UN COUPLAGE ENTRE UNE ANTENNE D'EMISSION ET UNE ANTENNE DE RECEPTION**
VORRICHTUNG ZUR KORREKTUR EINER KOPPLUNG ZWISCHEN EINER SENDEANTENNE UND EINER EMPFANGSANTENNE
APPARATUS FOR CORRECTING THE COUPLING BETWEEN A TRANSMITTING ANTENNA AND A RECEPTION ANTENNA

(30) Priorité: 07.09.2011 FR 1157915
(43) Date de publication de la demande: 16.07.2014
(73) Titulaire: Glizh, 35510 Cesson Sevigne (FR)
(72) Inventeur: JACQUIN, François, F-35510 Cesson Sevigne (FR)
(74) Mandataire: Maillet, Alain
(86) Numéro de dépôt international: PCT/EP2012/062714
(87) Numéro de publication internationale: WO 2013/034328

(56) Documents cités:
- EP-A2- 1 566 900

## Description

La présente invention concerne un dispositif de correction d'un couplage entre une antenne d'émission et une antenne de réception d'un réémetteur isofréquence de blocs de données numériques.

Un réémetteur isofréquence reçoit des signaux, les amplifie et émet ces signaux dans la même bande de fréquence que les signaux reçus pour effectuer une transmission vers une pluralité de récepteurs.

Un ensemble de blocs de données numériques est constitué de blocs de données numériques, chaque bloc de données numériques étant différent des autres blocs de données numériques comprises dans l'ensemble de blocs de données numériques.

Chaque bloc de données numériques se rapporte par exemple à un programme audiovisuel ou à un flux de données par exemple lié à une communication internet vers des récepteurs fixes ou mobiles.

La diffusion de programmes audiovisuels numériques, telle que la radiodiffusion ou la télédiffusion numérique terrestre, nécessite un déploiement de relais de retransmission dont le rôle est d'assurer un renforcement de la couverture de transmission sur une zone initialement non couverte par l'émetteur principal. Ces relais sont basés sur des réémetteurs.

Les réémetteurs sont principalement constitués d'une antenne de réception en charge de capter les signaux émis par un émetteur principal distant, d'un amplificateur et enfin d'une antenne d'émission en charge de réémettre les signaux, correspondant aux signaux reçus amplifiés sur une zone de couverture mal desservie par l'émetteur principal.

La juxtaposition d'une antenne de réception et d'une antenne d'émission du réémetteur sur un même site crée un phénomène nuisible appelé couplage. Le couplage se caractérise par le fait que des signaux réémis par l'antenne d'émission reviennent sur l'antenne de réception et sont captés par celle-ci. On nomme écho de couplage ces signaux reçus à l'antenne de réception provenant de l'antenne d'émission. Cette terminologie d"'écho" s'explique par le fait que dans le domaine de l'analyse temporelle, le signal parasite capté par l'antenne de réception correspond au signal source original, retardé d'un temps de retransmission.

L'écho de couplage nuit de manière importante à la réémission des signaux reçus, en particulier dans le cas d'un réémetteur isofréquence où signal reçu et signal émis utilisent les mêmes fréquences.

En effet, l'écho de couplage est amplifié par le réémetteur et peut provoquer une oscillation du réémetteur.

La présente invention a pour but de résoudre les inconvénients de l'art antérieur en proposant un dispositif de correction du couplage entre une antenne d'émission et une antenne de réception d'un réémetteur isofréquence de blocs de données numériques qui soit simple à mettre en oeuvre et efficace.

A cette fin, selon un premier aspect, l'invention propose un dispositif de correction d'un couplage entre une antenne d'émission et une antenne de réception d'un réémetteur isofréquence de blocs de données numériques, le réémetteur recevant des signaux représentatifs d'un ensemble de blocs de données numériques par l'intermédiaire d'une antenne de réception, le réémetteur insérant des signaux représentatifs d'au moins un bloc de données numériques local dans les signaux représentatifs de l'ensemble des blocs de données numériques reçus pour former des signaux représentatifs d'un nouvel ensemble de blocs de données numériques comprenant le au moins un bloc de données numériques local et au moins un bloc de données numériques reçu par l'antenne de réception, le réémetteur transmettant les signaux représentatifs du nouvel ensemble de blocs de données numériques par l'intermédiaire de l'antenne d'émission, caractérisé en ce que le dispositif de correction du couplage comporte :
- des moyens de codage du au moins un bloc de données numériques local dans le domaine radiofréquence pour former des signaux représentatifs du bloc de données numériques local, le au moins un bloc de données numériques local étant représentatif d'un programme audiovisuel local,
- des moyens d'estimation du couplage entre l'antenne d'émission et l'antenne de réception uniquement à partir des signaux représentatifs du au moins un bloc de données numériques local codé et de la partie du signal de couplage du au moins un bloc de données numériques local émis par l'antenne d'émission et reçu par l'antenne de réception,
- des moyens de filtrage des signaux représentatifs de l'ensemble de blocs de données numériques reçu à partir du couplage estimé,
- des moyens d'insertion des signaux représentatifs du au moins un bloc de données numériques local codé dans des signaux représentatifs de l'ensemble de blocs de données numériques reçu formant des signaux représentatifs du nouvel ensemble de blocs de données numériques,
- des moyens d'amplification et de transmission par l'intermédiaire de l'antenne d'émission des signaux représentatifs du nouvel ensemble de blocs de données numériques.

L'invention concerne aussi un procédé de correction d'un couplage entre une antenne d'émission et une antenne de réception d'un réémetteur isofréquence de blocs de données numériques, le réémetteur recevant des signaux représentatifs d'un ensemble de blocs de données numériques par l'intermédiaire d'une antenne de réception, le réémetteur insérant des signaux représentatifs d'au moins un bloc de données numériques local dans les signaux représentatifs de l'ensemble des blocs de données numériques reçus pour former des signaux représentatifs d'un nouvel ensemble de blocs de données numériques comprenant le au moins un bloc de données numériques local et au moins un bloc de données numériques reçu par l'antenne de réception, le réémetteur transmettant les signaux représentatifs du nouvel ensemble de blocs de données numériques par l'intermédiaire de l'antenne d'émission, caractérisé en ce que le procédé comporte les étapes de :
- codage du au moins un bloc de données numériques local dans le domaine radiofréquence pour former des signaux représentatifs du bloc de données numériques local, le au moins un bloc de données numériques local étant représentatif d'un programme audiovisuel local,
- estimation du couplage entre l'antenne d'émission et l'antenne de réception uniquement à partir des signaux représentatifs du au moins un bloc de données numériques local codé et de la partie du signal de couplage du au moins un bloc de données numériques local émis par l'antenne d'émission et reçu par l'antenne de réception,
- filtrage des signaux représentatifs de l'ensemble de blocs de données numériques reçu à partir du couplage estimé,
- insertion des signaux représentatifs du au moins un bloc de données numériques local codé dans des signaux représentatifs de l'ensemble de blocs de données numériques reçu formant des signaux représentatifs du nouvel ensemble de blocs de données numériques,
- amplification et de transmission par l'intermédiaire de l'antenne d'émission des signaux représentatifs du nouvel ensemble de blocs de données numériques.

Ainsi, la correction du couplage entre une antenne d'émission et une antenne de réception d'un réémetteur isofréquence de blocs de données numériques est simple à mettre en oeuvre et efficace.

La présente invention corrige le couplage très rapidement et avec une très forte dynamique car l'estimation du couplage se base sur la comparaison des signaux insérés localement avec leur image suite à amplification et couplage.

La présente invention ne nécessite pas une démodulation/modulation des signaux reçus, opération coûteuse en temps. Ceci est particulièrement intéressant dans le cas des réseaux synchronisés (SFN single Frequency Network) où toute opération doit prendre un temps inférieur, si ce n'est très inférieur, à l'intervalle de garde entre deux symboles OFDM (acronyme de Orthogonal Frequency Division Multiplex).

De plus, comme le niveau des signaux représentatifs du au moins un bloc de données numériques local reçu par couplage par l'antenne de réception peut être très supérieur aux signaux représentatifs de l'ensemble de bloc de données numériques reçu par l'antenne de réception, l'estimation du couplage est plus aisée. Selon un mode particulier de l'invention, l'estimation du couplage entre l'antenne d'émission et l'antenne de réception uniquement à partir des signaux représentatifs du bloc de données numériques local codé et de la partie du signal de couplage du bloc de données numériques local émis par l'antenne d'émission et reçu par l'antenne de réception est réalisée à partir d'un fenêtrage temporel sur les signaux reçus par l'antenne de réception.

Ainsi, il est possible de ne sélectionner que la partie des signaux reçus par l'antenne de réception qui sont liés aux signaux représentatifs du bloc de données numériques local codé. La correction du couplage entre l'antenne d'émission et l'antenne de réception du réémetteur isofréquence est simple à identifier sur ces données purement locales et facile à mettre en oeuvre et efficace sur l'ensemble des blocs de données numériques reçu.

Selon un mode particulier de l'invention, le réémetteur estime le canal de propagation par l'intermédiaire duquel l'ensemble de blocs de données numériques a été reçu et distord les signaux représentatifs du au moins un bloc de données numériques local codé selon l'estimation du canal de propagation par l'intermédiaire duquel les signaux représentatifs de l'ensemble de blocs de données numériques ont été reçus.

Ainsi, les signaux représentatifs du au moins bloc de données numériques local codé ont les mêmes distorsions que ceux représentatifs des blocs de données numériques reçus de l'émetteur principal. Cette caractéristique est particulièrement intéressante lorsque au moins un récepteur reçoit le nouvel ensemble de blocs de données numériques et effectue une estimation et une correction du canal de réception seulement sur une partie des signaux représentatifs de l'ensemble de blocs de données numériques, par exemple sur ceux représentatifs du début de l'ensemble de blocs de données numériques.

Selon un mode particulier de l'invention, l'estimation du canal de propagation par l'intermédiaire duquel l'ensemble de blocs de données numériques a été reçu est réalisée à partir d'un fenêtrage temporel et/ou fréquentiel sur les signaux reçus par l'antenne de réception.

Ainsi, comme les signaux représentatifs du au moins un bloc de données numériques local ne sont pas pris en compte lors de l'estimation du canal de propagation, l'estimation du canal de propagation est plus précise.

Selon un mode particulier de l'invention, les signaux représentatifs du au moins un bloc de données numériques local codé inséré dans les signaux représentatifs de l'ensemble de blocs de données numériques reçu formant le nouvel ensemble de blocs de données numériques remplacent des signaux non corrélés avec les signaux représentatifs du au moins un bloc de données numériques local codé.

Ainsi, la correction du couplage entre une antenne d'émission et une antenne de réception d'un réémetteur isofréquence est simple à mettre en oeuvre et efficace.

Selon un mode particulier de l'invention, les signaux reçus substitués par les signaux représentatifs du au moins un bloc de données numériques local codé sont des signaux de bourrage.

Ainsi, en choisissant les caractéristiques des signaux de bourrage, ces signaux non corrélés peuvent permettre d'améliorer les capacités telles que le traitement numérique de filtrage et de synchronisation entre l'émetteur principal et le réémetteur.

Selon un mode particulier de l'invention, les ensembles de blocs de données numériques sont codés avec une modulation de type OFDM.

Selon un mode particulier de l'invention, les signaux représentatifs des ensembles de blocs de données numériques sont conformes à la norme DAB ou DAB+ ou DVB-H ou DVB-T2 ou DVB-NHG ou T-DMB ou DRM ou DTMB ou CMMB ou ISDB-T/TBou LTE ou WiMax ou Wifi ou HiperLAN ou tout système de communication point-multipoint.

Selon un mode particulier de l'invention, les signaux représentatifs du bloc de données numériques local sont formés à partir d'un codage spatio-temporel des signaux représentatifs du au moins un bloc de données numériques local ou les signaux représentatifs des ensembles de blocs de données numériques transmis sont formés à partir d'un codage spatio-temporel des signaux représentatifs du au moins un bloc de données numériques local et d'un codage spatio-temporel des signaux représentatifs des ensembles de blocs de données numériques reçus.

En insérant des signaux formés à partir d'un codage spatio-temporel des signaux représentatifs du au moins un bloc de données numériques local, il est possible, lorsque au moins deux réémetteurs isofréquences sont proches et émettent le même bloc de données numériques local avec des codes spatio-temporels différents, que les signaux locaux émis par chacun des réémetteurs soient facilement séparables par les traitements numériques de suppression d'écho.

Lorsque plusieurs réémetteurs sont proches les uns des autres, chaque réémetteur insèrera une copie formée à partir d'un des codages spatio-temporels des signaux représentatifs du au moins un bloc de données numériques.

L'invention concerne aussi un réémetteur qui comporte un dispositif de correction d'un couplage entre une antenne d'émission et une antenne de réception selon la présente invention.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un premier exemple de réalisation d'un dispositif de correction d'un couplage entre une antenne d'émission et une antenne de réception d'un réémetteur isofréquence d'ensembles de blocs de données numériques ;
la Fig. 2 représente un second exemple de réalisation d'un dispositif de correction d'un couplage entre une antenne d'émission et une antenne de réception d'un réémetteur isofréquence d'ensembles de blocs de données numériques;
la Fig. 3 représente un algorithme de correction d'un couplage entre une antenne d'émission et une antenne de réception d'un réémetteur isofréquence d'ensembles de blocs de données numériques ;
La Fig. 4a représente un exemple de signaux représentatifs d'un ensemble de blocs de données numériques émis par un émetteur principal et reçu par le réémetteur isofréquence ;
La Fig. 4b représente un exemple de signaux représentatifs d'un ensemble de blocs de données numériques émis par le réémetteur isofréquence.

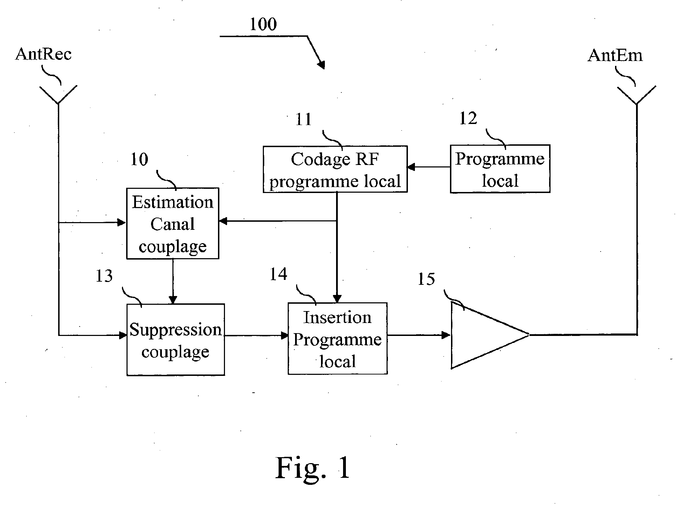

La **Fig. 1** représente un premier exemple de réalisation d'un dispositif de correction d'un couplage entre une antenne d'émission et une antenne de réception d'un réémetteur isofréquence d'ensembles de blocs de données numériques.

La présente invention est décrite dans un exemple dans lequel le réémetteur comporte une antenne de réception et une antenne d'émission. La présente invention est aussi applicable dans des configurations où le réémetteur comporte plusieurs antennes de réception et/ou plusieurs antennes d'émission.

La présente description est décrite dans un exemple où les blocs de données numériques sont des programmes audiovisuels diffusés. L'homme du métier transposera sans effort la présente invention dans d'autres applications telles que la diffusion de flux internet ou toute autre application de transfert de données numériques dans laquelle un réémetteur insère des blocs de données numériques pour les émettre avec au moins une partie des blocs de données numériques qu'il a reçus à destination d'une pluralité de récepteurs.

Le dispositif de correction d'un couplage 100 comprend une antenne de réception AntRec, une antenne d'émission AntEm, un module d'estimation du canal de couplage 10 entre l'antenne d'émission AntEm et l'antenne de réception AntRec, un module d'obtention d'un programme audiovisuel local 12, un module de codage du programme local 11, un module de suppression de couplage 13, un module d'insertion 14 du programme local codé et un amplificateur 15.

Le module d'estimation du canal 10 de couplage entre l'antenne d'émission AntEm et l'antenne de réception AntRec est relié à l'antenne de réception AntRec. Le module d'estimation du canal 10 estime, selon la présente invention, le couplage uniquement à partir des signaux représentatifs du programme local codé et de la partie du signal de couplage du programme codé local émis par l'antenne d'émission AntEm et reçu par l'antenne de réception AntRec.

Pour cela, le module d'estimation du canal 10 effectue un filtrage temporel des signaux reçus par l'antenne AntRec pour ne récupérer que la partie des signaux représentatifs du programme audiovisuel local.

En effet, les signaux représentatifs de l'ensemble de programmes audiovisuels sont subdivisés en périodes temporelles. En variante, ces signaux représentatifs de l'ensemble de programmes audiovisuels sont subdivisés en composantes temporelles ou temporelles et fréquentielles.

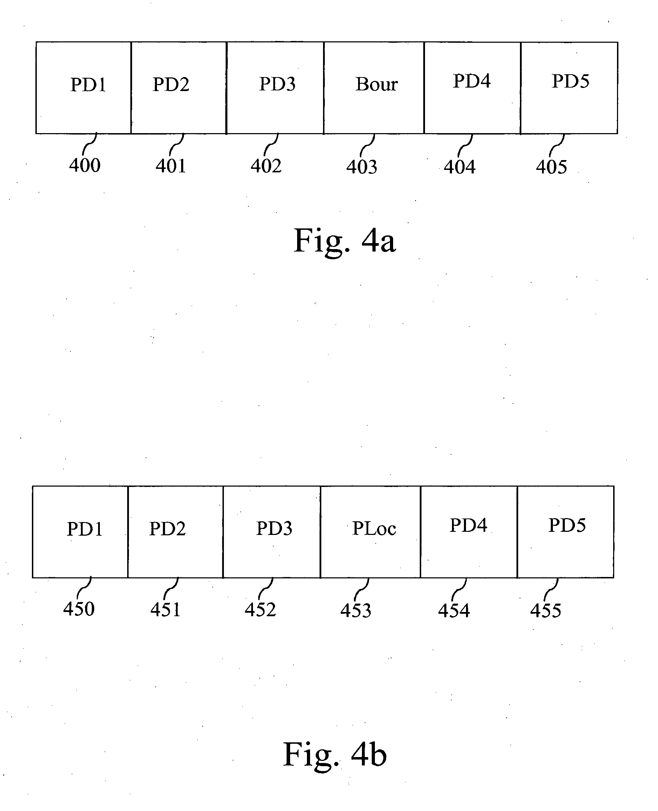

Un exemple de signaux représentatifs d'un ensemble de programmes audiovisuels est représenté en Fig. 4.

L'ensemble de programmes audiovisuels est par exemple conforme à la norme DAB (Digital Audio Broadcasting ; en français diffusion audio numérique) ou DAB+ ou DVB-H (Digital Video Broadcasting - Handheld ; en français, diffusion vidéo numérique - mobile) ou DVB-T2 (Digital Video Broadcasting - Second Generation Terrestrial en français diffusion audio numérique seconde génération); ou DVB-NGH DVB-NGH (Digital Video Broadcasting Next Generation Handheld ; en français, Diffusion vidéo numérique - mobile nouvelle génération) ou T-DMB (Terrestrial Digital Multimedia Broadcasting, en français diffusion multimédia numérique terrestre) ou DRM (Digital Radio Mondiale ; en français radio digitale mondiale) ou DTMB (Digital Terrestrial Multimedia Broadcast ; en français diffusion multimédia terrestre numérique) ou CMMB (China Mobile Multimedia Broadcasting ; en français diffusion multimédia mobile chinois) ou ISDB-T1 or SBTVD (Sistema Brasileiro de Televisão Digital; en français système brésilien de télévision numérique) ISDB-T/TB...

Les ensembles de blocs de données numériques sont par exemple conformes à la norme LTE (Long Term Advanced ; en français évolution à long terme) ou WiFI,© ou Wimax (Worldwide Interoperability for Microwave Access en français interopérabilité mondiale pour accès microonde).

La **Fig. 4a** représente un exemple d'un ensemble de blocs de données numériques diffusés par un émetteur principal et reçus par le réémetteur isofréquence.

Les signaux représentatifs d'un ensemble de programmes audiovisuels émis par un émetteur principal comprennent cinq périodes temporelles 400, 401, 402, 404 et 405 dans lesquelles sont transmis périodiquement ou non les signaux représentatifs de cinq programmes audiovisuels PD1, PD2, PD3, PD4 et PD5 ainsi qu'une période temporelle 403 comprenant des signaux tels que des signaux de bourrage Bour. D'autres types de signaux, comme par exemple représentatifs d'un ou plusieurs programmes audiovisuels, ou de données de synchronisation peuvent être transmis dans la période temporelle 403 à la place des signaux de bourrage Bour, ceux-ci devront néanmoins être décorrélés des signaux représentatifs du au moins un programme audiovisuel local inséré par le réémetteur 100.

Les signaux de bourrage sont des signaux non corrélés avec les signaux représentatifs du programme audiovisuel local inséré ou avec les signaux formés à partir d'un codage spatio-temporel des signaux représentatifs du au moins un programme audiovisuel local inséré. Les signaux de bourrage sont conformes à la norme de transmission, et sont représentatifs ou non de données utilisables par les récepteurs. Les signaux de bourrage peuvent être représentatifs de données aléatoires ou de données servant à l'amélioration des caractéristiques du réseau de diffusion telle la synchronisation.

Bien entendu, l'ensemble de programmes audiovisuels peut comprendre un nombre différent de programmes audiovisuels.

Le module d'estimation du canal 10, à partir des signaux représentatifs du programme audiovisuel codé par le module de codage 11 et des signaux de couplage du programme audiovisuel local émis par l'antenne d'émission AntEm et reçus par l'antenne de réception AntRec, détermine le couplage existant entre les deux antennes.

Le module d'obtention du programme audiovisuel local 12 obtient le programme audiovisuel local à diffuser d'une source distante, par exemple par l'intermédiaire d'un réseau de communication filaire.

Un programme audiovisuel local est un programme qui est uniquement diffusé sur la zone de couverture d'au moins un réémetteur et non par l'émetteur principal.

Le module de codage RF 11 du programme local code le programme audiovisuel local sous forme de signaux conformément à la norme utilisée pour la transmission de signaux représentatifs de l'ensemble de programmes audiovisuels reçu.

Dans un mode de réalisation particulier, le module de codage RF 11 du programme local code le programme audiovisuel local à partir d'un codage spatio-temporel des signaux représentatifs du programme local codé.

Le codage spatio-temporel est par exemple un codage tel que décrit dans la publication de S.M Alamouti intitulée « A simple transmit diversity technique for wireless communication » publiée dans la revue IEEE « Journal on Selected Areas in Communications » pages 1451 à 1458 en Octobre 1998.

Le module d'estimation du canal de couplage 10 fournit l'estimation du couplage au module de suppression de couplage 13 qui filtre chaque programme audiovisuel PD1 à PD5 de manière à supprimer l'écho.

Les opérations effectuées par le module d'estimation du canal 10 et le module de suppression de couplage 13 sont par exemple celles décrites dans le livre intitulé « Mobile Communications Handbook » éditions Ed. Suthan S. Suthersan, Boca Raton: CRC Press LLC, 1999.

Le module d'insertion de programme audiovisuel local 14 insère les signaux représentatifs du programme audiovisuel local codé dans l'ensemble de programmes audiovisuels reçu et filtré par le module de suppression de couplage 13.

Dans un mode particulier de réalisation, le module d'insertion de programme audiovisuel local 14 insère les signaux formés à partir d'un codage spatio-temporel des signaux représentatifs du au moins un programme audiovisuel local dans l'ensemble de programmes audiovisuels reçu et filtré par le module de suppression de couplage 13.

Dans un mode particulier de réalisation, le module d'insertion de programme audiovisuel local 14 insère les signaux formés à partir d'un codage spatio-temporel des signaux représentatifs du au moins un programme audiovisuel local dans les signaux représentatifs des ensembles de blocs de données numériques reçus filtrés par le module de suppression de couplage 13 et codés selon un codage spatio-temporel.

Un exemple de signaux représentatifs du nouvel ensemble de programmes audiovisuels formé après l'insertion du programme audiovisuel local codé est représenté à la Fig. 4b.

La **Fig. 4b** représente un exemple de signaux représentatifs d'un ensemble de programmes audiovisuels émis par le réémetteur isofréquence.

Les signaux représentatifs de l'ensemble de programmes audiovisuels émis par un émetteur principal comprend cinq périodes temporelles 450, 451, 452, 454 et 455 dans lesquelles sont transmis périodiquement des signaux représentatifs de cinq programmes audiovisuels PD1, PD2, PD3, PD4 et PD5 ainsi qu'une période temporelle 453 dans laquelle les signaux représentatifs du programme audiovisuel local Ploc sont insérés.

Bien entendu, l'ensemble de programmes audiovisuels peut comprendre un nombre différent de programmes audiovisuels.

Les signaux du nouvel ensemble de programmes audiovisuels sont amplifiés par l'amplificateur 15 avant d'être émis par l'antenne d'émission AntEm.

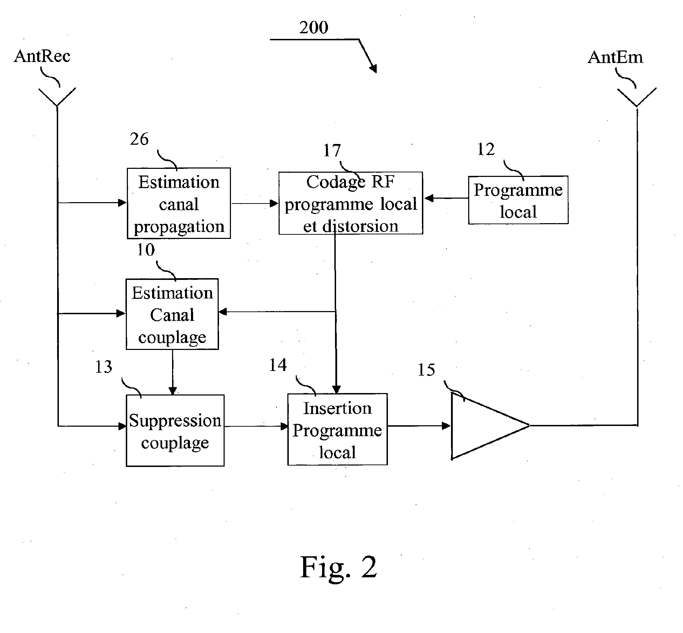

La **Fig. 2** représente un second exemple de réalisation d'un dispositif de correction d'un couplage entre une antenne d'émission et une antenne de réception d'un réémetteur isofréquence d'ensembles de blocs de données numériques.

Le dispositif de correction d'un couplage 200 comporte des éléments identiques au dispositif de correction d'un couplage 100. Ces éléments sont l'antenne de réception AntRec, l'antenne d'émission AntEm, le module d'estimation du canal 10 de couplage entre l'antenne d'émission AntEm et l'antenne de réception AntRec, le module d'obtention d'un programme audiovisuel local 12, le module de suppression de couplage 13, le module d'insertion 14 du programme audiovisuel local codé et l'amplificateur 15.

Le dispositif de correction d'un couplage 200 comporte en outre un module d'estimation du canal de propagation 26 qui estime le canal hertzien de transmission entre l'émetteur principal et le réémetteur. L'estimation du canal hertzien de transmission est effectuée soit sur les signaux représentatifs des programmes audiovisuels reçus par l'antenne de réception AntRec soit sur les signaux représentatifs des programmes audiovisuels reçus sur lesquels l'écho a été supprimé.

L'estimée du canal de transmission est transférée au module de codage du programme local 17 qui distord les signaux représentatifs du programme audiovisuel local codé de la même manière que les signaux des programmes audiovisuels émis par l'émetteur principal ont été distordus par le canal de transmission.

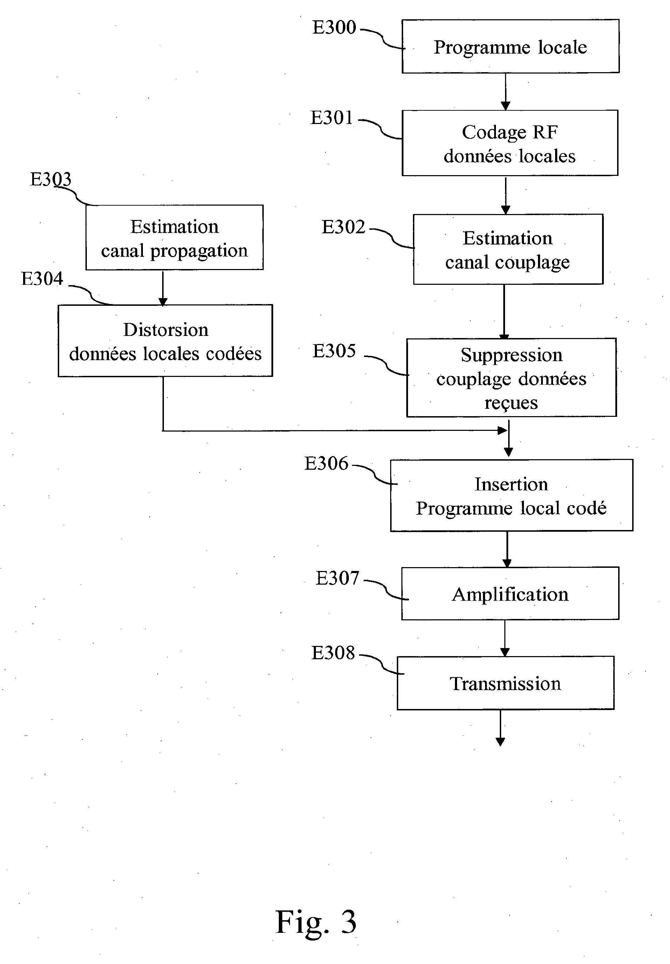

La **Fig. 3** représente un algorithme de correction d'un couplage entre une antenne d'émission et une antenne de réception d'un réémetteur isofréquence d'ensembles de blocs de données numériques.

A l'étape E300, le programme audiovisuel local est obtenu.

A l'étape suivante E301, le programme audiovisuel local est codé sous forme de signaux conformément à la norme utilisée pour la transmission d'ensembles de programmes audiovisuels.

Dans un mode de réalisation particulier, le programme audiovisuel local est codé à partir d'un codage spatio-temporel des signaux représentatifs du programme audiovisuel local codé.

A l'étape suivante E302, le canal de couplage entre l'antenne de réception AntRec et l'antenne d'émission AntEm est estimé.

Selon l'invention, le couplage est uniquement estimé à partir des signaux représentatifs du programme local codé et de la partie du signal de couplage du programme local émis par l'antenne d'émission AntEm et reçu par l'antenne de réception AntRec.

A l'étape E305, l'estimation du couplage est fournie au module de suppression de couplage 13 qui filtre individuellement ou collectivement chaque programme audiovisuel PD1 à PD5 de manière à supprimer l'écho.

A l'étape E303, l'estimation du canal de transmission entre l'émetteur principal et le réémetteur est effectuée.

A l'étape suivante E304, les signaux représentatifs du programme audiovisuel local codé sont distordus de la même manière que ceux des programmes audiovisuels émis par l'émetteur principal ont été distordus par le canal de transmission.

Il est à remarquer que les étapes E303 et E304 peuvent être effectuées parallèlement aux étapes E302 et E305 ou à la suite de l'étape E302.

Il est à remarquer que les étapes E303 et E304 ne sont pas nécessairement effectuées. Dans ce cas, l'algorithme passe directement de l'étape E305 à E306.

A l'étape E306, les signaux représentatifs du programme audiovisuel local codé sont insérés dans l'ensemble de programmes audiovisuels reçu et filtré pour former des signaux représentatifs d'un nouvel ensemble de programmes audiovisuels.

Dans un mode particulier de réalisation, les signaux formés à partir d'un codage spatio-temporel des signaux représentatifs du au moins un programme audiovisuel local sont insérés dans l'ensemble de programmes audiovisuels reçu et filtré..

Dans un mode particulier de réalisation, les signaux formés à partir d'un codage spatio-temporel des signaux représentatifs du au moins un programme audiovisuel local sont insérés dans les signaux représentatifs des ensembles de blocs de données numériques reçus filtrés et codés selon un codage spatio-temporel.

A l'étape suivante E307, les signaux représentatifs du nouvel ensemble de programmes audiovisuels sont amplifiés par l'amplificateur avant d'être émis à l'étape E308 par l'antenne d'émission AntEm.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

## Revendications

1. Dispositif de correction d'un couplage (100) entre une antenne d'émission (AntEm) et une antenne de réception (AntRec) d'un réémetteur isofréquence de blocs de données numériques, le réémetteur recevant des signaux représentatifs d'un ensemble de blocs de données numériques par l'intermédiaire d'une antenne de réception (AntRec), le réémetteur insérant des signaux représentatifs d'au moins un bloc de données numériques local dans les signaux représentatifs de l'ensemble des blocs de données numériques reçus pour former des signaux représentatifs d'un nouvel ensemble de blocs de données numériques comprenant le au moins un bloc de données numériques local et au moins un bloc de données numériques reçu par l'antenne de réception (AntRec), le réémetteur transmettant les signaux représentatifs du nouvel ensemble de blocs de données numériques par l'intermédiaire de l'antenne d'émission (AntEm), **caractérisé en ce que** le dispositif de correction du couplage comporte :
- des moyens de codage (11) du au moins un bloc de données numériques local dans le domaine radiofréquence pour former des signaux représentatifs du bloc de données numériques local, le au moins un bloc de données numériques local étant représentatif d'un programme audiovisuel local,
- des moyens d'estimation (10) du couplage entre l'antenne d'émission et l'antenne de réception uniquement à partir des signaux représentatifs du au moins un bloc de données numériques local codé et de la partie du signal de couplage du au moins un bloc de données numériques local émis par l'antenne d'émission (AntEm) et reçu par l'antenne de réception (AntRec),
- des moyens de filtrage des signaux représentatifs de l'ensemble de blocs de données numériques reçu à partir du couplage estimé,
- des moyens d'insertion (14) des signaux représentatifs du au moins un bloc de données numériques local codé dans des signaux représentatifs de l'ensemble de blocs de données numériques reçu formant des signaux représentatifs du nouvel ensemble de blocs de données numériques,
- des moyens d'amplification (15) et de transmission par l'intermédiaire de l'antenne d'émission (AntEm) des signaux représentatifs du nouvel ensemble de blocs de données numériques.

2. Dispositif selon la revendication 1, **caractérisé en ce que** l'estimation du couplage entre l'antenne d'émission (AntEm) et l'antenne de réception (AntRec) uniquement à partir des signaux représentatifs du bloc de données numériques local codé et de la partie du signal de couplage du bloc de données numériques local émis par l'antenne d'émission (AntEm) et reçu par l'antenne de réception (AntRec) est réalisée à partir d'un fenêtrage temporel sur les signaux reçus par l'antenne de réception (AntRec).

3. Dispositif selon la revendication 1 ou 2, **caractérisé en ce que** le dispositif comporte en outre :
- des moyens d'estimation du canal de propagation par l'intermédiaire duquel l'ensemble de blocs de données numériques a été reçu,
- des moyens de distorsion des signaux représentatifs du au moins un bloc de données numériques local codé selon l'estimation du canal de propagation par l'intermédiaire duquel les signaux représentatifs de l'ensemble de blocs de données numériques ont été reçus.

4. Dispositif selon la revendication 4, **caractérisé en ce que** l'estimation du canal de propagation par l'intermédiaire duquel les signaux représentatifs de l'ensemble de blocs de données numériques ont été reçus est réalisée à partir d'un fenêtrage temporel et/ou fréquentiel sur les signaux reçus par l'antenne de réception (AntRec).

5. Dispositif selon l'une quelconque des revendications précédentes, **caractérisé en ce que** les signaux représentatifs du au moins un bloc de données numériques local codé inséré dans les signaux représentatifs de l'ensemble de blocs de données numériques reçu formant le nouvel ensemble de blocs de données numériques remplacent des signaux non corrélés avec les signaux représentatifs du au moins un bloc de données numériques local codé.

6. Dispositif selon l'une quelconque des revendications précédentes, **caractérisé en ce que** les signaux non corrélés avec les signaux représentatifs du au moins un bloc de données numériques local codé sont des signaux de bourrage.

7. Dispositif selon l'une quelconque des revendications précédentes, **caractérisé en ce que** les ensembles de blocs de données numériques sont codés avec une modulation de type OFDM.

8. Dispositif selon l'une quelconque des revendications précédentes, **caractérisé en ce que** les signaux représentatifs des ensembles de blocs de données numériques reçus et transmis sont conformes à la norme DAB ou DAB+ ou DVB-H ou DVB-T2 ou DVB-NGH ou LTE ou Wifi ou Wimax ou DTMB, ou CMMB.

9. Dispositif selon l'une quelconque des revendications précédentes, **caractérisé en ce que** les signaux représentatifs du bloc de données numériques local sont formés à partir d'un codage spatio-temporel des signaux représentatifs du au moins un bloc de données numériques local ou les signaux représentatifs des ensembles de blocs de données numériques transmis sont formés à partir d'un codage spatio-temporel des signaux représentatifs du au moins un bloc de données numériques local et d'un codage spatio-temporel des signaux représentatifs des ensembles de blocs de données numériques reçus.

10. Réémetteur **caractérisé en ce qu'**il comporte un dispositif de correction d'un couplage (100) entre une antenne d'émission (AntEm) et une antenne de réception (AntRec) selon l'une quelconque des revendications 1 à 9.

11. Procédé de correction d'un couplage entre une antenne d'émission (AntEm) et une antenne de réception (AntRec) d'un réémetteur isofréquence de blocs de données numériques, le réémetteur recevant des signaux représentatifs d'un ensemble de blocs de données numériques par l'intermédiaire d'une antenne de réception (AntRec), le réémetteur insérant des signaux représentatifs d'au moins un bloc de données numériques local dans les signaux représentatifs de l'ensemble des blocs de données numériques reçus pour former des signaux représentatifs d'un nouvel ensemble de blocs de données numériques comprenant le au moins un bloc de données numériques local et au moins un bloc de données numériques reçu par l'antenne de réception (AntRec), le réémetteur transmettant les signaux représentatifs du nouvel ensemble de blocs de données numériques par l'intermédiaire de l'antenne d'émission (AntEm), **caractérisé en ce que** le procédé comporte les étapes de :
- codage du au moins un bloc de données numériques local dans le domaine radiofréquence pour former des signaux représentatifs du bloc de données numériques local, le au moins un bloc de données numériques local étant représentatif d'un programme audiovisuel local,
- estimation du couplage entre l'antenne d'émission (AntEm) et l'antenne de réception (AntRec) uniquement à partir des signaux représentatifs du au moins un bloc de données numériques local codé et de la partie du signal de couplage du au moins un bloc de données numériques local émis par l'antenne d'émission et reçu par l'antenne de réception (AntRec),
- filtrage des signaux représentatifs de l'ensemble de blocs de données numériques reçu à partir du couplage estimé,
- insertion des signaux représentatifs du au moins un bloc de données numériques local codé dans des signaux représentatifs de l'ensemble de blocs de données numériques reçu formant des signaux représentatifs du nouvel ensemble de blocs de données numériques,
- amplification et de transmission par l'intermédiaire de l'antenne d'émission (AntEm) des signaux représentatifs du nouvel ensemble de blocs de données numériques.

## Patentansprüche

1. Vorrichtung zur Korrektur einer Kopplung (100) zwischen einer Sendeantenne ([franz. Abk.] AntEm) und einer Empfangsantenne ([franz. Abk.] AntRec) eines Isofrequenz-Umsetzers von Blöcken numerischer Daten, wobei der Umsetzer Signale, die einen Komplex von Blöcken numerischer Daten darstellen, über eine Empfangsantenne (AntRec) empfängt, der Umsetzer Signale, die mindestens einen lokalen Block numerischer Daten darstellen, in die Signale einfügt, die den Komplex von Blöcken empfangener numerischer Daten darstellen, um Signale zu bilden, die einen neuen Komplex numerischer Daten darstellen, welcher mindestens einen lokalen Block numerischer Daten und mindestens einen von der Empfangsantenne (AntRec) empfangenen Block numerischer Daten umfasst, wobei der Umsetzer die Signale, die den neuen Komplex von Blöcken numerischer Daten darstellen, über die Sendeantenne (AntEm) überträgt, charakterisiert dadurch, dass die Vorrichtung zur Korrektur der Kopplung Folgendes enthält:
- Einrichtung zur Kodierung (11) von mindestens einem lokalen Block numerischer Daten im Funkfrequenzbereich, um Signale zu bilden, die den lokalen Block numerischer Daten darstellen, wobei mindestens ein lokaler Block numerischer Daten ein lokales audiovisuelles Programm darstellt,
- Einrichtung zur Abschätzung (10) der Kopplung zwischen der Sendeantenne und der Empfangsantenne einzig und allein ausgehend von den Signalen, die mindestens einen kodierten lokalen Block numerischer Daten darstellen, und dem Teil des Kopplungssignals mindestens eines Blocks numerischer Daten, der von der Sendeantenne (AntEm) gesendet und von der Empfangsantenne (AntRec) empfangen wird,
- Einrichtung zur Filterung der Signale, die den Komplex von Blöcken numerischer Daten darstellen, der ab der geschätzten Kopplung empfangen wird,
- Einrichtung zur Einfügung (14) von Signalen, die mindestens einen kodierten lokalen Block numerischer Daten darstellen, in Signale, die den empfangenen Komplex von Blöcken numerischer Daten darstellen, welcher Signale bildet, die den neuen Komplex von Blöcken numerischer Daten darstellen,
- Einrichtung zur Verstärkung (15) und Übertragung über die Sendeantenne (AntEm) von Signalen, die den neuen Komplex von Blöcken numerischer Daten darstellen.

2. Vorrichtung gemäß Anspruch 1, die dadurch charakterisiert ist, dass die Abschätzung der Kopplung zwischen der Sendeantenne (AntEm) und der Empfangsantenne (AntRec) einzig und allein ab den Signalen, die den kodierten lokalen Block von numerischen Daten darstellen, und dem Teil des Kopplungssignals des lokalen Blocks numerischer Daten, der von der Sendeantenne (AntEm) gesendet und von der Empfangsantenne (AntRec) empfangen wird, ab einer zeitweisen Fensterbildung bei den von der Empfangsantenne empfangenen Signalen (AntRec) realisiert wird.

3. Vorrichtung gemäß Anspruch 1 oder 2, die dadurch charakterisiert ist, dass die Vorrichtung außerdem Folgendes enthält:
- Einrichtung zur Abschätzung des Übertragungskanals über welchen der Komplex von Blöcken numerischer Daten empfangen worden ist,
- Einrichtung zur Verzerrung der Signale, die mindestens einen kodierten lokalen Block numerischer Daten darstellen, gemäß der Abschätzung des Übertragungskanals, über welchen die Signale, die den Komplex von Blöcken numerischer Daten darstellen, empfangen worden sind.

4. Vorrichtung gemäß Anspruch 4, die dadurch charakterisiert ist, dass die Abschätzung des Übertragungskanals, über welchen die Signale, die den Komplex von Blöcken numerischer Daten darstellen, empfangen worden sind, ab einer zeitweisen und/oder frequenziellen Fensterbildung bei den von der Empfangsantenne empfangenen Signalen (AntRec) realisiert wird.

5. Vorrichtung gemäß einem der vorstehenden Ansprüche, die dadurch charakterisiert ist, dass die Signale, die mindestens einen kodierten lokalen Block von numerischen Daten darstellen, der in die Signale eingefügt wird, die den empfangenen Komplex von numerischen Daten darstellen, welcher den neuen Komplex von Blöcken numerischer Daten bildet, Signale ersetzen, die nicht mit den Signalen zusammenhängen, die mindestens einen kodierten lokalen Block von numerischen Daten darstellen.

6. Vorrichtung gemäß einem der vorstehenden Ansprüche, die dadurch charakterisiert ist, dass die Signale, die nicht mit den Signalen zusammenhängen, die mindestens einen kodierten lokalen Block von numerischen Daten darstellen, Stausignale sind.

7. Vorrichtung gemäß einem der vorstehenden Ansprüche, die dadurch charakterisiert ist, dass die Komplexe von Blöcken numerischer Daten mit einer OFDM-Modulation kodiert sind.

8. Vorrichtung gemäß einem der vorstehenden Ansprüche, die dadurch charakterisiert ist, dass die Signale, die die Komplexe von empfangenen und übertragenen Blöcken numerischer Daten darstellen, der Norm DAB oder DAB+ oder DVB-H oder DVB-T2 oder DVB-NGH oder LTE oder Wifi oder Wimax oder DTMB oder CMMB entsprechen.

9. Vorrichtung gemäß einem der vorstehenden Ansprüche, die dadurch charakterisiert ist, dass die Signale, die den lokalen Block numerischer Daten darstellen, ab einer raumzeitlichen Kodierung der Signale, die mindestens einen lokalen Block numerischer Daten darstellen, gebildet werden oder die Signale, die Komplexe von übertragenen Blöcken numerischer Daten darstellen, ab einer raumzeitlichen Kodierung der Signale, die mindestens einen lokalen Block numerischer Daten darstellen, und einer raumzeitlichen Kodierung der Signale, die Komplexe von empfangenen Blöcken numerischer Daten darstellen, gebildet werden.

10. Umsetzer, der dadurch charakterisiert ist, dass er eine Vorrichtung zur Korrektur einer Kopplung (100) zwischen einer Sendeantenne (AntEm) und einer Empfangsantenne (AntRec) gemäß einem der Ansprüche 1 bis 9 enthält.

11. Verfahren zur Korrektur einer Kopplung zwischen einer Sendeantenne (AntEm) und einer Empfangsantenne (AntRec) eines Isofrequenz-Umsetzers von Blöcken numerischer Daten, wobei der Umsetzer Signale, die einen Komplex von Blöcken numerischer Daten darstellen, über eine Empfangsantenne (AntRec) empfängt, der Umsetzer Signale, die mindestens einen lokalen Block numerischer Daten darstellen, in die Signale einfügt, die den Komplex der Blöcke empfangener numerischer Daten darstellen, um Signale zu bilden, die einen neuen Komplex von Blöcken numerischer Daten darstellen, welche mindestens einen lokalen Block numerischer Daten und mindestens einen durch die Empfangsantenne (AntRec) empfangenen Block numerischer Daten enthalten, wobei der Umsetzer die Signale, die den neuen Komplex von Blöcken numerischer Daten darstellen, über die Sendeantenne (AntEm) überträgt, charakterisiert dadurch, dass das Verfahren die folgenden Schritte umfasst:
- Kodierung mindestens eines lokalen Blocks numerischer Daten im Funkfrequenzbereich, um Signale zu bilden, die den lokalen Block numerischer Daten darstellen, wobei mindestens ein lokaler Block numerischer Daten ein lokales audiovisuelles Programm darstellt,
- Abschätzung der Kopplung zwischen der Sendeantenne (AntEm) und der Empfangsantenne (AntRec) einzig und allein ab den Signalen, die mindestens einen kodierten lokalen Block numerischer Daten darstellen, und dem Teil des Kopplungssignals eines lokalen Blocks numerischer Daten, der von der Sendeantenne gesendet und von der Empfangsantenne (AntRec) empfangen wird,
- Filterung der Signale, die den Komplex von Blöcken numerischer Daten darstellen, der ab der abgeschätzten Kopplung empfangen wird,
- Einfügung der Signale, die mindestens einen kodierten lokalen Block numerischer Daten darstellen, in Signale, die den empfangenen Komplex von numerischen Daten darstellen, wobei Signale gebildet werden, die den neuen Komplex von Blöcken numerischer Daten darstellen,
- Verstärkung und Übertragung der Signale, die den neuen Komplex von Blöcken numerischer Daten darstellen, über die Sendeantenne (AntEm).

## Claims

1. Correction device for a coupling (100) between a transmitter antenna (AntEm) and a receiver antenna (AntRec) of an isofrequency retransmitter of digital data, the retransmitter receiving representative signals of a group of digital data blocks by way of a receiver antenna (AntRec), the retransmitter inserting the representative signals of at least one local digital data block into the representative signals of the group of digital data blocks which are received, in order to form representative signals of a new group of digital data blocks, comprising the at least one local digital data block and at least one digital data block received by the receiver antenna (AntRec), the retransmitter transmitting the representative signals of the new group of digital data blocks by way of a transmitter antenna (AntEm), **characterized in that** the correction of the coupling comprises:
- Means of coding (11) of the at least one local digital data block in the radio frequency range in order to form representative signals of the local digital data block, the at least one local digital data block being representative of a local audiovisual program,
- Means of assessment (10) of the coupling between the transmitter antenna and the receiver antenna solely on the basis of the representative signals of the at least one coded local digital data block and the part of the coupling signal of the at least one local digital data block transmitted by the transmitter antenna (AntEm) and received by the receiver antenna (AntRec),
- Means of filtering the representative signals of the group of digital data blocks received, on the basis of the assessed coupling,
- Means of insertion (14) of the representative signals of the at least one coded local digital data block into the representative signals of the received group of digital data blocks, forming representative signals of the new group of digital data blocks,
- Means of amplification (15) and transmission by way of the transmitter antenna (AntEm) of the representative signals of the new group of digital data blocks.

2. Device according to claim 1, **characterized in that** the assessment of the coupling between the transmitter antenna (AntEm) and the receiver antenna (AntRec) solely on the basis of the representative signals of the coded local digital data block and the part of the coupling signal of the local digital data block transmitted by the transmitter antenna (AntEm) and received by the receiver antenna (AntRec) is carried out on the basis of time windowing imposed on the signals received by the receiver antenna (AntRec).

3. Device according to claim 1 or 2, **characterized in that** the device further comprises:
- Means for the assessment of the propagation channel by way of which the group of digital data blocks has been received,
- Means of distortion of the representative signals of the at least one coded local digital data block in accordance with the assessment of the propagation channel by way of which the representative signals of the group of digital data blocks have been received.

4. Device according to claim 4 [sic], **characterized in that** the assessment of the propagation channel by way of which the representative signals of the group of digital data blocks have been received is carried out on the basis of time and/or frequency windowing imposed on the signals received by the receiver antenna (AntRec).

5. Device according to any of the preceding claims, **characterized in that** the representative signals of the at least one coded local digital data block inserted in the representative signals of the group of digital data blocks received form the new group of digital data blocks, replacing the signals not correlated with the representative signals of the at least one coded local digital data block.

6. Device according to any of the preceding claims, **characterized in that** the signals not correlated with the representative signals of the at least one local coded digital data block are filler signals.

7. Device according to any of the preceding claims, **characterized in that** the groups of digital data blocks are coded with a modulation of OFDM type.

8. Device according to any of the preceding claims, **characterized in that** the representative signals of the digital data blocks received and transmitted conform to the standard DAB or DAB+ or DVB-H or DVB-T2 or DVB-NGH or LTE or Wifi or Wimax or DTMB or CMMB.

9. Device according to any of the preceding claims, **characterized in that** the representative signals of the local digital data block are formed on the basis of a spatio-temporal coding of the representative signals of the at least one local digital data block, or the representative signals of the groups of digital data blocks transmitted are formed on the basis of a spatio-temporal coding of the representative signals of the at least one local digital data block and a spatio-temporal coding of the representative signals of the groups of digital data blocks received.

10. Retransmitter, **characterized in that** it comprises a device for correcting a coupling (100) between a transmitter antenna (AntEm) and a receiver antenna (AntRec) according to any one of claims 1 to 9.

11. Method for correcting a coupling between a transmitter antenna (AntEm) and a receiver antenna (AntRec) of an isofrequency retransmitter of digital data blocks, the retransmitter receiving representative signals of a group of digital data blocks by way of a receiver antenna (AntRec), the retransmitter inserting the representative signals of the at least one local digital data block into the representative signals of the group of digital data blocks received, in order to form representative signals of a new group of digital data blocks, comprising the at least one local digital data block and at least one digital data block received by the receiver antenna (AntRec), the retransmitter retransmitting the representative signals of the new group of digital data blocks by way of the transmitter antenna (AntEm), **characterized in that** the method comprises the steps of:
- Coding of the at least one local digital data block in the radiofrequency range in order to form representative signals of the local digital data block, the at least one local digital data block being representative of a local audiovisual program,
- Assessment of the coupling between the transmitter antenna (AntEm) and the receiver antenna (AntRec) solely on the basis of the representative signals of the at least one coded local digital data block and of the part of the coupling signal of the at least one local digital data block transmitted by the transmitter antenna and received by the receiver antenna (AntRec),
- Filtering of the representative signals of the group of digital data blocks received on the basis of the assessed coupling,
- Insertion of the representative signals of the at least one coded local digital data block into the representative signals of the group of digital data blocks received, forming representative signals of the new group of digital data blocks,
- Amplification and transmission by way of the transmitter antenna (AntEm) of the representative signals of the new group of digital data blocks.
